# EUROPEAN PATENT APPLICATION

(11) **EP 4 304 047 A1**
(43) Date of publication of application: **10.01.2024**
(21) Application number: 22182877.5
(22) Date of filing: 04.07.2022
(51) Int. Cl.: H02J 7/34

(54) **PRE-CHARGING SYSTEM AND METHOD FOR AN ELECTRIC VEHICLE**

(71) Applicant: Valmet Automotive Oy, 23501 Uusikaupunki (FI)
(72) Inventor: Karsikas, Toni, 23501 Uusikaupunki (FI); Kelkka, Juuso, 23501 Uusikaupunki (FI)
(74) Representative: Papula Oy

(57) **Abstract**

Disclosed is a pre-charge circuit for an electricvehicle battery management system (BMS) and a method. The circuit comprises a current regulator for zerovoltage switching configured for regulating pre-charge current for a dc-link of an electric vehicle and a switch for bypassing the current regulator after a voltage across the pre-charge circuit reaches a target.

## Description

### FIELD

The present disclosure relates to electric vehicles. In particular, the disclosure relates to electric-vehicle battery management.

### BACKGROUND

An important purpose of a battery management system (BMS) of an electric vehicle is to maintain the energy storage cells in their safe operating area (SOA). This may include preventing overvoltage, undervoltage, overtemperature and/or under temperature of the energy storage cells. For this reason, a BMS includes means to interrupt or prevent current loading prior to stepping out of SOA or while outside of SOA, respectively.

Due to a very low internal resistance electric-vehicle batteries, such as lithium-ion batteries, the disconnection switching devices are often required to reliably disconnect several hundreds of amperes of current. This requirement leads to a mechanically bulky solution. Usually the disconnection devices, which traditionally are provided as mechanical main contactors, are designed to reliably disconnect a very high current only once, after which they require replacement.

On the other hand, the load system side of the electrical circuit, called the dc-link often incorporates considerable capacitance in form of electrolytic capacitors and direct low impedance switching would result in an excessive short circuit current and possible damage of the switching elements and other devices. To prevent excessive current flow upon dc-link connection, an initial high impedance connection is established with a pre-charge circuit.

In current state of the art battery systems, the pre-charge circuit is comprised of a mechanical relay and a power resistor. The resistor shall be sized so as to minimize charging time while limiting the initial inrush current and resistor power dissipation to a reliable level.

### OBJECTIVE

An objective is to provide an improvement over the state-of-the-art solutions.

In particular, it is an objective to provide improved pre-charge circuits, battery management systems, battery systems and electric vehicles.

### SUMMARY

According to a first aspect, a pre-charge circuit for an electric-vehicle battery management system (BMS) is provided. The circuit comprises a current regulator for zero-voltage switching configured for regulating pre-charge current for a dc-link of an electric vehicle. It also comprises a switch for bypassing the current regulator after a voltage across the pre-charge circuit reaches a target. Instead of a passive resistor-based switching circuit, an active circuit with a current regulator suitable for zero-voltage switching is therefore utilized to regulate the pre-charge current. The current can thus be regulated throughout the full pre-charge process. This allows an improvement over the resistor-based switching circuit, where the pre-charge current decreases in function of the rising dc-link voltage as the voltage difference between the battery and the dc-link (which may refer also to the voltage across the pre-charge circuit) becomes ever smaller. Due to strict timing constraints, the switching of the main contactors in such solutions would need to be done with a voltage difference of several volts, resulting in considerably high switching currents, stress and reduced lifetime of the switching elements. Due to the current regulator, the switching with the disclosed pre-charge circuit may be performed at any voltage difference, thereby reducing switching currents and burden on the switching elements. Moreover, current regulation allows the pre-charge time in overall to be reduced.

The disclosed pre-charge circuit also allows minimizing the stress induced to the (main) switch compared to traditional resistive pre-charge implementations. In resistive pre-charging, the charge current diminishes gradually as the load system voltage approaches the battery voltage, resulting in a prolonged pre-charge cycle time if low current switching is desired. To meet the stringent timing requirements (especially in automotive applications), the connection of the main switching element is done with a voltage difference of several volts, resulting in relatively high switching current and a reduced lifetime of the switch. In the proposed solution, the pre-charge current can be kept at or above a constant level also with a considerably low delta voltage between dc-link and battery (which may refer also to the voltage across the pre-charge circuit) and the required pre-charge time can be minimized. Main contactor switching may be provided with low switching current due to low delta voltage between dc-link and battery.

In an embodiment, the current regulator is configured for providing the pre-charge current at or above a constant level. This allows regulating the pre-charge current, in a particular embodiment to a constant value, so that the pre-charge current does not decrease below the constant level as the voltage across the pre-charge circuit decreases. Hence the stresses induced to the pre-charge circuit can be minimized, in particular in comparison to a high inrush current induced in a passive resistor-based circuit. Fast pre-charge with lower thermal stress of the pre-charge circuit can be enabled by keeping the current constant throughout the pre-charge process, whereas fast pre-charge with passive resistor-based circuit requires high initial current translating to high thermal stress.

In an embodiment, the current regulator comprises a MOSFET switch for regulating the pre-charge current. For this purpose, the MOSFET switch may be used in its linear region. Using the MOSFET switch has been found to allow current regulation in an efficient and customizable manner for the pre-charge circuit.

In an embodiment, the current regulator comprises a bipolar transistor for regulating the pre-charge current. This has been found to allow particularly resource efficient regulation for the pre-charge circuit.

In an embodiment, the switch is a semiconductor switch. It is noted that the structure of the first aspect, in fact, allows a semiconductor switch to be used as the stress on the switching elements may be reduced. In turn, the use of a semiconductor switch can provide various benefits such as reduced size and improved efficiency.

In an embodiment, the pre-charge circuit is configured for closing the switch to bypass the current regulator once the voltage across the pre-charge circuit is smaller than a threshold voltage, the threshold voltage being at most two volts. This allows, for example, reducing the stress to the switch.

Industrial safety critical battery applications are often required to offer high capacity, reliability and availability. A modular high-capacity battery system can be created by connecting several battery modules in parallel. A battery system can offer both reliability and availability by redundancy amongst parallel connected packs or modules. State of the art is that the parallel packs or modules are all connected to the load system via a single load switching element such as a mechanical contactor. In this configuration, a single pack or module fault will lead to the disconnection of the complete energy storage system from the load - thus providing poor availability.

In the proposed modular battery system, each battery pack (which may also be referred as a battery module or module, in short) incorporates a load switching unit, provided by the pre-charge circuit. This allows effectively enabling the individual modules to disconnect from the load in case of a fault or e.g., overheating, all the while allowing the rest of the modules to continue to provide current to the load system, or dc-link in particular. The non-simultaneous disconnection of modules may result in capacity imbalance between modules which shall be properly managed on battery system level. Direct parallel connection of low-impedance modules with differing voltage level would results in excessively high surge currents within the system creating a high risk of system failure. Traditional resistive voltage balancing of complete modules would induce excessive stresses to the cell supervision circuitry within a module, possibly leading to a shortened lifetime of the electronics. Furthermore, the balancing time for e.g., a 1 Ah imbalance can take in excess of 10 hours.

In an embodiment, the pre-charge circuit is configured for facilitating supply of pre-charge current between two battery packs for voltage balancing. This allows safe parallel connection of unevenly balanced batteries with differing voltage levels. Due to the bidirectional nature of the circuit, it does not matter whether the unevenly balanced module has a higher or lower terminal voltage in respect to the rest of the system. Balancing time can be, for example, five to ten times less.

According to a second aspect, an electric-vehicle battery system comprising an electric-vehicle battery management system and one or more battery packs coupled to the one or more pre-charge circuits according to the first aspect, alone or in any combination with its embodiments, for powering an electric vehicle.

In an embodiment, the electric-vehicle battery system comprises two or more battery packs coupled in parallel electric connection, each coupled to the one or more pre-charge circuits, as disclosed in the embodiment for voltage balancing above, for bi-directional voltage balancing of the two or more battery packs.

According to a third aspect, an electric vehicle comprises the electric-vehicle battery system according to the second aspect, alone or in any combination with its embodiments, for powering the electric vehicle.

According to a fourth aspect, a method for a pre-charge circuit comprises regulating pre-charge current for a dc-link of an electric-vehicle battery management system with a zero-voltage-switching current regulator of the pre-charge circuit and bypassing the current regulator with a switch of the pre-charge circuit after a voltage across the pre-charge circuit reaches a target. The method may be utilized for pre-charge by the electric-vehicle battery management system.

In an embodiment, the pre-charge current is regulated, after increasing at or above a constant level, to maintain at or above the constant level until the current regulator is bypassed with the switch. In a particular embodiment, the pre-charge current is maintained at or above the constant level throughout the pre-charge process.

In an embodiment, the switch is closed to bypass the current regulator once the voltage across the pre-charge circuit is smaller than a threshold voltage, the threshold voltage being at most two volts.

In an embodiment, the method comprises supplying pre-charge current between two battery packs for voltage balancing, in particular through the current regulator.

It is to be understood that the aspects and embodiments described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding and constitute a part of this specification, illustrate examples and together with the description help to explain the principles of the disclosure. In the drawings:
**Fig. 1** illustrates a battery system according to an example,
**Fig. 2** illustrates voltage balancing according to two examples,
**Fig. 3** illustrates pre-charging according to two examples,
**Fig. 4** illustrates a method according to an example, and
**Fig. 5** illustrates a circuit diagram according to an example.

Like references are used to designate equivalent or at least functionally equivalent parts in the accompanying drawings.

### DETAILED DESCRIPTION

The detailed description provided below in connection with the appended drawings is intended as a description of examples and is not intended to represent the only forms in which the example may be constructed or utilized. However, the same or equivalent functions and structures may be accomplished by different examples.

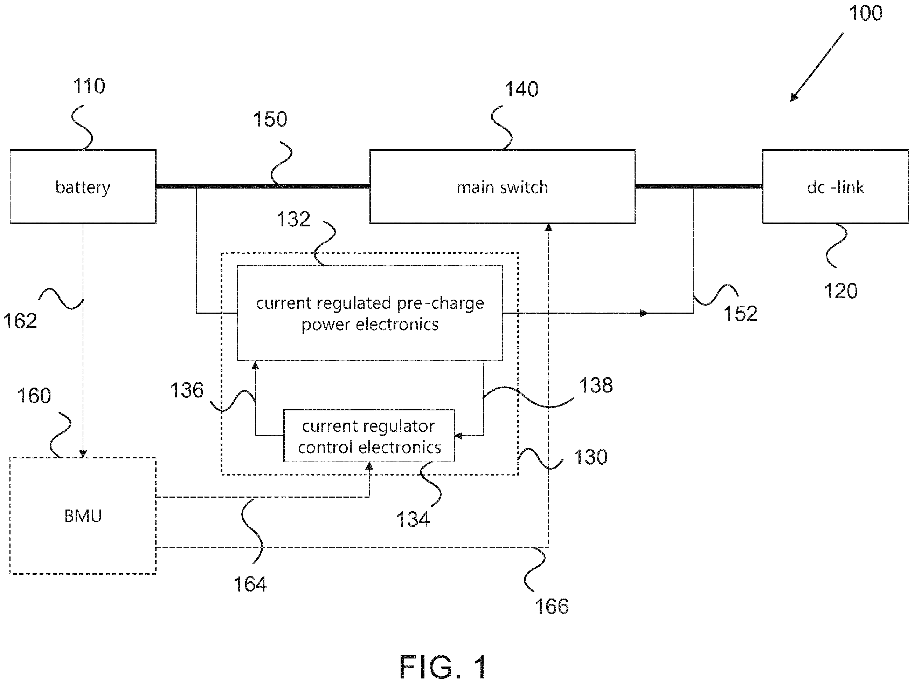

Figure 1 shows an example of an electric-vehicle battery system 100. The system comprises an electric-vehicle battery management system (BMS), which may be coupled to a battery pack 110 (for an electric vehicle) for protecting the battery pack from operating outside its safe operating area (SOA). The BMS may also be configured for monitoring the state of the battery pack and/or further operations, such as voltage balancing (which may also be referred as battery balancing or battery redistribution). The battery pack may be provided as part of the battery system but it may also be replaceable. In particular, the battery pack may be a lithium-ion battery pack. The battery pack may comprise multiple cells, such as lithium-ion cells, for storing electricity. The BMS, and thereby the battery system, may be directly or indirectly coupled to a dc-link 120 of the electric vehicle for transmitting power to the electric vehicle, and the dc-link may thus be seen here to represent a load side for the battery back. The dc-link may comprise one or more capacitors such as electrolytic capacitors. The solution may be utilized in any dc-link pre-charge system, where the dc-link has a considerable capacitance.

A pre-charge circuit is disclosed for coupling the battery pack 110 to the dc-link. The pre-charge circuit may be provided as part of the BMS and it comprises a current regulator 130 for zero-voltage switching configured for regulating pre-charge current for the dc-link. The current regulator may be suitable for zero-voltage switching (which may be referred also as minimum-voltage switching) so that it allows switching also when the voltage across the pre-charge circuit approaches zero. Such a current regulator may be provided utilizing a MOSFET (metal-oxide semiconductor field effect transistor) switch or a bipolar transistor. For example, a threshold voltage of the bipolar transistor may be configured for regulating the pre-charge current in various ways familiar to a person skilled in the art of zero-voltage switching. When a MOSFET switch is used, it may be configured, in particular, for operation in its linear regime. The current regulator may be configurable so that it allows the value of the pre-charge current to be set within a range for any value of the voltage across the pre-charge circuit. The pre-charge current profile may thus be customizable. For example, the pre-charge current may have a constant profile or, at least partially, increasing or decreasing profile as a function of the voltage across the pre-charge circuit. This allows optimizing the pre-charge process. Importantly, the pre-charging circuit as disclosed can be provided as an active circuit.

The current regulator 130 may comprise separate control electronics 134 and power electronics 132. The regulator may be configured for the control electronics feeding a control signal 136 to the power electronics. It may also be configured for feedback so that the power electronics provide a feedback signal 138 to the control electronics.

The pre-charge circuit also comprises a (main) switch 140 for bypassing the current regulator 130, or the power electronics thereof in particular, after a voltage across the pre-charge circuit reaches a target. The switch may be a mechanical switch. Importantly, the configuration of the pre-charge circuit with the current regulator allows the (main) switch to be provided as a semiconductor switch, which may further improve characteristics of the pre-charge circuit such as customizability, flexibility, size and cost.

The current regulator 130 and the switch 140 may be configured to be connected electrically in parallel and in between the battery pack 110 and the dc-link. This way, when the switch is open, pre-charge current 152 between the battery pack and the dc-link may be directed through the current regulator, or the power electronics 132 thereof in particular. Accordingly, when the switch is closed, charging current 150 may be directed from the battery pack to the dc-link through a charging connection. The charging current may be delivered without limitation as the dc-link has been pre-charged with the pre-charge current.

The target, for the voltage across the pre-charge circuit, may be configured, for example, as a target value, such as a threshold voltage across the pre-charge circuit. The target may correspond to a target voltage difference between the battery pack 110 and the dc-link 120. The current regulator 130 may thus be configured for providing the pre-charge current at or above a constant level. This condition may be observed throughout the pre-charge process or, in particular, at the end of the pre-charge process so that the pre-charge current does not fall without limit as the voltage across the pre-charge circuit approaches zero. As a particular example, this allows constant-current pre-charge, which may be provided throughout the pre-charge process, until the voltage across the pre-charge circuit is equal or smaller than a threshold voltage. In principle, the threshold voltage may be zero volts but, in some situations, it is advantageous to have a threshold voltage clearly above zero volts, for example one volts or two volts, at most. This allows optimizing the pre-charge process, in particular for making it possible to utilize configurations where voltage equivalence across the pre-charge circuit is not a necessary requirement.

The BMS may comprise a battery management unit (BMU) 160 for controlling the pre-charge circuit. It may be coupled 162 to the battery pack 110 for receiving information of the battery pack, such as information of a state of charge (SoC) of the battery pack. It may be configured for providing a control signal to the current regulator 130, in particular to the control electronics 134 thereof, for controlling the current regulator. For this purpose, the battery system may comprise one or more control connections 164. The BMU may also be configured for providing a control signal to the (main) switch 140 for controlling the main switch. Also for this purpose, the battery system may comprise one or more control connections 166. The BMS may be configured for the BMU to receive status information, for example regarding the voltage at the battery pack 110 and/or at the dc-link 130. The BMU may facilitate providing any configuration as disclosed for the current regulator. The BMU may also be configured for providing information to a user of the battery system or the electric vehicle.

In general, the battery system 100 may comprise multiple battery packs 110 and/or pre-charge circuits. In particular, for a battery system with two or more battery packs each battery pack may have a separate, dedicated pre-charge circuit as disclosed herein. The solution can be particularly advantageously utilized for two or more battery connected (electrically) in parallel. Each parallel-connected battery pack may thus have its own load-switching unit as provided by the pre-charge circuit 130. The parallel-connected battery packs may thus be joined for the parallel connection before the dc-link 120 so that they may exchange charge without delivering current through the dc-link.

The pre-charge circuit 130 may be configured to facilitate supply of pre-charge current between two battery packs 110 for voltage balancing. For this purpose, also the BMU 160 may be utilized. In particular, this voltage balancing may be bi-directional so that the battery pack corresponding to the pre-charge circuit may both provide and receive a balancing current for voltage balancing between battery packs. The battery system 100, as a whole, may thus be configured for bi-directional voltage balancing between any pair of parallel-connected battery packs. When the number of battery packs is three or more, any of the battery packs may thus receive balancing current from two or more battery packs. The balancing current may be several amperes, e.g. 1-3 amperes or more but also any other value depending on the system design, allowing the voltage to be balanced relative rapidly, in comparison to dissipative balancing through a dumping resistor, which results in a relatively small balancing current such as 100mA.

The battery system 100 may comprise one or more cooling elements configured for cooling the current regulator 130. This allows increasing the life time of the regulator, such as a MOSFET switch.

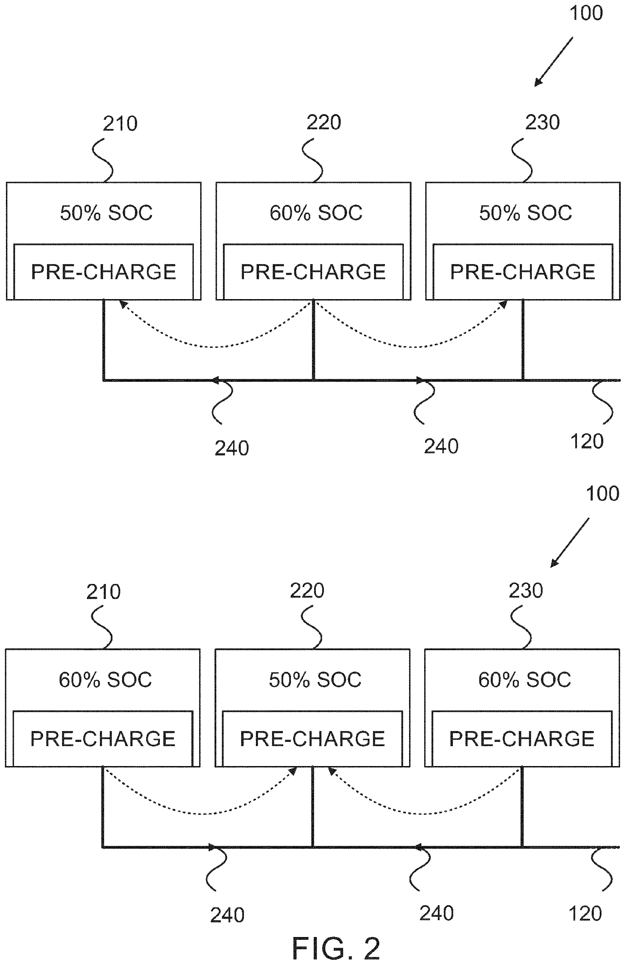

Fig. 2 illustrates voltage balancing according to two examples. In both, the battery system 100 has three or more battery packs 110 in parallel, each coupled to the dc-link 120 through their dedicated pre-charge circuit. When the SoC for the battery packs is notably different, they cannot be connected to the dc-link directly without introducing a short circuit voltage.

In the first example (above), the first battery pack 210 and/or the third battery pack 230 have a lower SoC (e.g. 50%) than the second battery pack 220 (e.g. 60%). Consequently, the battery system may be configured to balance voltages between the battery packs by inducing a balancing current 240 from the second battery back to the first battery pack and/or the third battery pack. When a single battery pack is used to provide a balancing current to two or more battery packs, the balancing current may be divided evenly between the battery packs. However, it may also be divided in proportion of the difference in SOC between the battery packs so that balancing at the different battery packs is finished at the same time. The division of current may take place automatically. Electric current to/from any battery pack may be limited by a maximum current of the pre-charge circuit.

In the second example (below), the first battery pack 210 and/or the third battery pack 230 have a higher SoC than the second battery pack 220. Consequently, the battery system may be configured to balance voltages between the battery packs by inducing a balancing current 240 from the first battery pack and/or the third battery pack to the second battery back. In all cases, the (main) switch for the pre-charge circuits for the corresponding battery packs may be open. The balancing current may be transferred through the pre-charge circuits for the corresponding battery packs, or through the current regulators 130 thereof, in particular.

The solution allows active balancing of voltage between battery packs, in comparison to a traditional method where voltage is balanced by simply reducing the SoC of any battery pack(s) with SoC larger than that of the others. With active balancing, energy can be recovered since it is not simply dissipated but transferred from one battery pack to another.

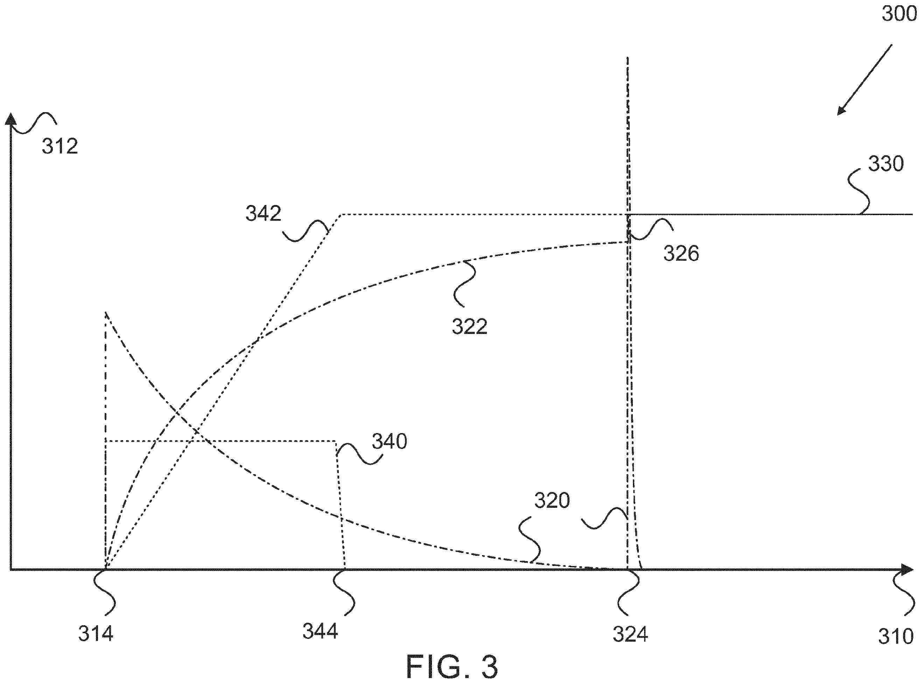

Fig. 3 illustrates pre-charging for the dc-link according to two examples: a traditional one and an improved one. In both cases the x-axis 310 corresponds to time dimension, whereas the y-axis 312 corresponds to either voltage or current. The pre-charge process, as illustrated, is set to begin at the same starting moment 314 in both cases.

In traditional pre-charging, for example through a passive resistor-based switching circuit, the pre-charge current 320 for the traditional pre-charge circuit initially rises sharply but then diminishes without a lower bound as the voltage 322 at the dc-link rises and the voltage across the pre-charge circuit falls. In typical configurations, the voltage of the dc-link either cannot reach the voltage 330 of the battery pack at all (for example if the dc-link has a non-zero base load, e.g. 1 ampere) or reaching it would take an impractical length of time. Therefore, the contactor for the traditional pre-charge circuit is closed prematurely at the first closing moment 324, even when there is a notable voltage difference 326, such as 10 volts, between the dc-link and the battery pack, leading to a current peak for the pre-charge current that induces stress to the contactor.

In improved pre-charging, in accordance with the present disclosure, the pre-charge current 340 is regulated, for example as a constant current as illustrated. Because of this, it does not need to fall without limit as the voltage 342 at the dc-link rises. For pre-charge circuit as disclosed, the pre-charge current may be regulated independent of the voltage across the pre-charge circuit. Because of this, the voltage of the dc-link may reach the voltage of the battery pack. In addition, it may do this in a shorter time in comparison to the traditional method at the second closing moment 344. Importantly, no sharp increase in the voltage of the dc-link is required as the voltage across the pre-charge circuit can be lowered at or below 2 volts, for example, before closing the (main) switch of the pre-charge circuit. Having a semiconductor switch as the (main) switch allows implementing this particularly efficiently. The solution allows a pre-charge process with shortened duration.

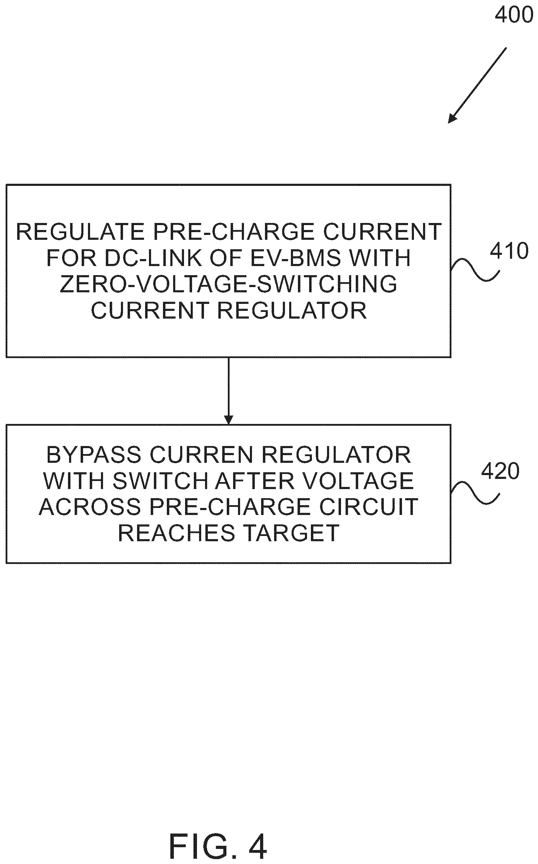

Figure 4 shows an example of a method 400. The method may be utilized for pre-charge of an electric vehicle. It may comprise regulating 410 pre-charge current for a dc-link of an electric-vehicle battery management system with a zero-voltage-switching current regulator of a pre-charge circuit, which may correspond to any of the pre-charge circuits disclosed herein. The method may also comprise bypassing 420 the current regulator with a switch of the pre-charge circuit after a voltage across the pre-charge circuit reaches a target, for example as disclosed above with reference to the pre-charge circuit 130. The pre-charge current, after, increasing at or above a constant level, may be regulated to maintain at or above the constant level until the current regulator is bypassed with the switch. The switch may be closed to bypass the current regulator once the voltage across the pre-charge circuit is smaller than a threshold voltage, the threshold voltage being at most two volts. The method may further comprise supplying pre-charge current between two battery packs for voltage balancing, for example as disclosed above with reference to voltage balancing. The voltage balancing may be performed bi-directionally to and from any of the battery packs.

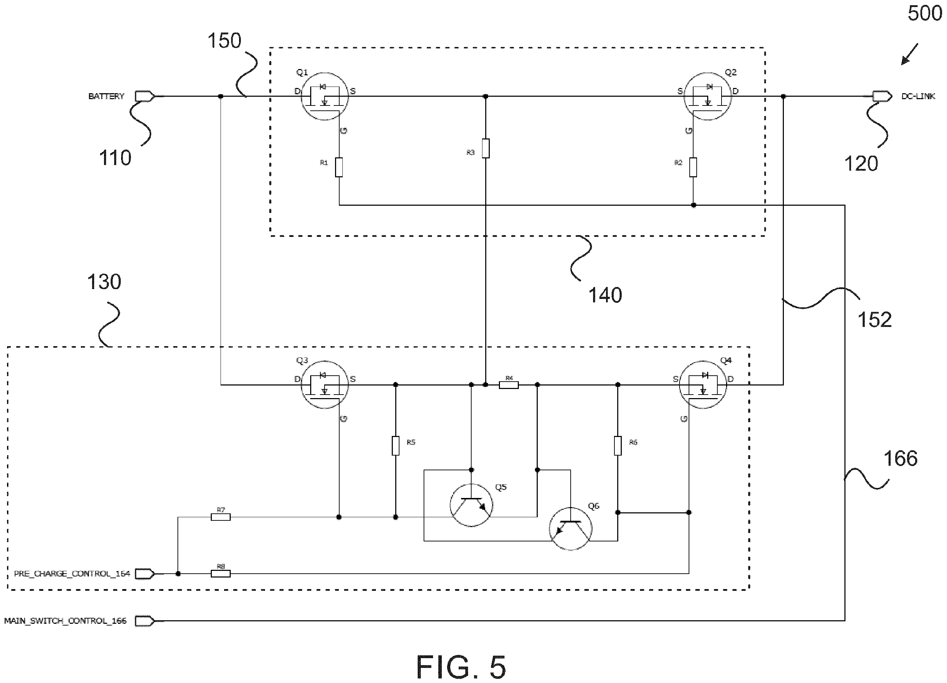

Figure 5 illustrates a circuit diagram for pre-charging for the dc-link. Shown are various components of the BMS according to an example and a pre-charge circuit, in particular. The BMS may be part of a battery system 100, for example as illustrated with reference to Figure 1. As therein, the (main) switch 140 can be connected between the battery pack 110 and the dc-link 120. It may be a semiconductor switch. It may also comprise two or more sub-switches. The current regulator 130 may be configured for by passing the (main) switch. It may comprise one or more switches, such as semiconductor switches.

The electric vehicle referred in any context herein may be, in particular, an electric car. The electric vehicle may be a pure-electric vehicle powered exclusively through one or more electric motors or it may be a hybrid electric vehicle. The electric vehicle may be a plug-in electric vehicle. The electric vehicle may comprise the battery system as disclosed herein for powering the electric vehicle. It may comprise the BMS. It may comprise any number of battery packs and/or pre-charge circuits as disclosed herein.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

Although the invention has been described in conjunction with a certain type of apparatus and/or method, it should be understood that the invention is not limited to any certain type of apparatus and/or method. While the present inventions have been described in connection with a number of examples, embodiments and implementations, the present inventions are not so limited, but rather cover various modifications, and equivalent arrangements, which fall within the purview of the claims. Although various examples have been described above with a certain degree of particularity, or with reference to one or more individual embodiments, those skilled in the art could make numerous alterations to the disclosed examples without departing from the scope of this specification.

## Claims

1. A pre-charge circuit for an electric-vehicle battery management system (BMS), comprising:
- a current regulator for zero-voltage switching configured for regulating pre-charge current for a dc-link of an electric vehicle; and
- a switch for bypassing the current regulator after a voltage across the pre-charge circuit reaches a target.

2. The pre-charge circuit according to claim 1, wherein the current regulator is configured for providing the pre-charge current at or above a constant level.

3. The pre-charge circuit according to any preceding claim, wherein the current regulator comprises a MOSFET switch for regulating the pre-charge current.

4. The pre-charge circuit according to any preceding claim, wherein the current regulator comprises a bipolar transistor for regulating the pre-charge current.

5. The pre-charge circuit according to any preceding claim, wherein the switch is a semiconductor switch.

6. The pre-charge circuit according to any preceding claim, configured for closing the switch to bypass the current regulator once the voltage across the pre-charge circuit is smaller than a threshold voltage, the threshold voltage being at most two volts.

7. The pre-charge circuit according to any preceding claim, configured for facilitating supply of pre-charge current between two battery packs for voltage balancing.

8. An electric-vehicle battery system comprising an electric vehicle battery management system and one or more battery packs coupled to the one or more pre-charge circuits according to any preceding claim for powering an electric vehicle.

9. The electric-vehicle battery system according to claim 8 comprising two or more battery packs coupled in parallel electric connection, each coupled to the one or more pre-charge circuits according to claim 7 for bi-directional voltage balancing of the two or more battery packs.

10. An electric vehicle comprising the electric-vehicle battery system according to claim 8 or 9 for powering the electric vehicle.

11. A method for a pre-charge circuit, comprising:
- regulating pre-charge current for a dc-link of an electric vehicle with a zero-voltage-switching current regulator of the pre-charge circuit; and
- bypassing the current regulator with a switch of the pre-charge circuit after a voltage across the pre-charge circuit reaches a target.

12. The method according to claim 11, wherein the pre-charge current, after, increasing at or above a constant level, is regulated to maintain at or above the constant level until the current regulator is bypassed with the switch.

13. The method according to claim 11 or 12, wherein the switch is closed to bypass the current regulator once the voltage across the pre-charge circuit is smaller than a threshold voltage, the threshold voltage being at most two volts.

14. The method according to any of claims 11-13, comprising supplying pre-charge current between two battery packs for voltage balancing.
